# EUROPÄISCHE PATENTANMELDUNG

(11) **EP 0 951 875 A2**
(43) Veröffentlichungstag der Anmeldung: **27.10.1999**
(21) Anmeldenummer: 99106175.5
(22) Anmeldetag: 08.04.1999
(51) Int. Cl.: A61C 5/04

(54) **Mittel zum Füllen von Wurzelkanälen und Herstellungsverfahhren**

(30) Priorität: 22.04.1998 DE 19817846
(71) Anmelder: ROEKO GmbH + Co. Dentalerzeugnisse, 89122 Langenau (DE)
(72) Erfinder: Herrmann, Rolf, 89312 Günzburg (DE); Mannschedel, Werner, 89129 Langenau (DE)
(74) Vertreter: Forstmeyer, Dietmar, Dr. rer. nat., Dipl.-Chem.

(57) **Zusammenfassung**

Die Erfindung betrifft ein Füllmittel (1) mit einem proximalen (5) und einem distalen (4) Ende für Wurzelkanäle von Menschen und Tieren, das ein längliches stromleitendes Element (2) umfaßt, welches mit einer Matrix auf Isoprenbasis (3) ummantelt ist, dadurch gekennzeichnet, daß das distale Ende des stromleitenden Elements freiliegt. Ferner betrifft die Erfindung ein Herstellungsverfahren für das erfindungsgemäße Füllmittel.

## Beschreibung

Die vorliegende Erfindung betrifft ein längliches Mittel (1) zum Füllen von Wurzelkanälen von Menschen und Tieren, das ein längliches stromleitendes Element (2) umfaßt, welches mit einer Matrix auf Isoprenbasis (3) ummantelt ist, dadurch gekennzeichnet, daß ein Ende des stromleitenden Elements freiliegt.

Sie betrifft ferner ein Herstellungsverfahren für das Füllmittel.

Zur Therapie der als Pulpitis bekannten Erkrankung wird die erkrankte Pulpa mechanisch aus dem Wurzelkanal entfernt, der Wurzelkanal gereinigt und ausgebohrt, mit einem elastisch-plastischen Element oder einem anderen Füllmaterial gefüllt und danach versiegelt. Zum Stand der Technik sei beispielsweise auf Friedman et al. in J. Dent. Res., 54 (1975) 921-925, Briseno in Philipp J., 2, 90, 65-73 und US-A-4 632 977 verwiesen. Briseno beschreibt als Wurzelkanalfüllmaterialien unter anderem halbfeste Zemente auf Kunstharzbasis, Zinkoxid-Eugenol-Basis, Calciumhydroxidbasis und Glas-Ionomerbasis. Die US-A-4 632 977 schlägt Füllmaterialien auf Trans-Poly-Isopren-Basis vor, beispielsweise auf Basis von Guttapercha oder Balata. Im Handel sind Guttapercha-Spitzen erhältlich, deren Standardzusammensetzung 20 Gew.-% Guttapercha als Matrix, 60 bis 75 Gew.-% Zinkoxid als Füllstoff, 1 bis 17 Gew.-% Schwermetallsulfate als Röntgenkontrastmittel und 3 bis 4 Gew.-% Wachse und Harze als Weichmacher vorsieht. Dieses bekannte Füllmaterial ist im Wurzelkanal inert und reagiert demgemäß nicht mit dem Körpergewebe.

Die Festlegung der genauen Arbeitslänge in einem Wurzelkanal gehört bei der Behandlung der Pulpitis zu den wichtigsten Arbeitsschritten der endodontologischen Behandlung und entscheidet über Erfolg und Mißerfolg. Die Aufbereitung eines Zahns sollte kurz vor dem Apex, nämlich in der apikalen Konstriktion, d.h. der engsten Stelle des Wurzelkanals enden. Werden die Wurzelkanäle nicht bis in eine ausreichende Tiefe aufbereitet und werden die zur Versiegelung des Wurzelkanals verwendeten Guttaperchastifte nicht weit genug in den Wurzelkanal hineingeschoben, so können sich Bakterien im Restwurzelkanal vermehren, was zu Problemen beim Patienten führt. Werden die Guttaperchastifte über den Wurzelkanal hinaus in das Periapikalgewebe geschoben, so kann es zu Schmerzen und Entzündungen kommen.

Bisher war es üblich, den Apex durch Röntgenaufnahmen zu bestimmen, wobei in der Praxis Meßfeilen in den Wurzelkanal eingeführt wurden. Es stellte sich allerdings heraus, daß sich der radiologische Apex erheblich vom anatomischen Apex unterscheidet: Der anatomische Apex ist der Punkt des Zahns, der morphologisch am weitesten von der Kaufläche des Zahns entfernt liegt; der röntgenologische Apex hingegen ist der Punkt, der (geometrisch) am weitesten von der Kaufläche entfernt liegt. In Folge dessen kam es häufig zu fehlerhaften Bestimmungen der Länge des Wurzelkanals, was zu den vorstehend dargestellten Problemen führte. Ferner waren gegebenenfalls mehrere Röntgenaufnahmen pro Wurzelkanal nötig, da sich die Kanallängen bei einer Begradigung von Kanalkrümmungen verändern können, was einen deutlichen Aufwand nötig machte und zu einer erheblichen Bestrahlungsdosis des Patienten führte.

Es wurden daher in der Folge Messungen von Impedanzen durchgeführt: Ein Wurzelkanalinstrument wird an ein Endometriegerät angeschlossen; über das Wurzelkanalinstrument wird Strom in den Wurzelkanal geleitet wobei eine Hand- oder Lippenelektrode als Gegenelektrode verwendet wird. Wenn der Widerstand zwischen Meß- und Gegenelektrode einen bestimmten Wert annimmt, hat die Instrumentenspitze den Apex erreicht.

Gemäß einem weiteren Verfahren des Stands der Technik werden Guttaperchastifte z.B. durch Eintauchen oder Aufdampfen mit einer leitfähigen Schicht überzogen, dann in den Wurzelkanal eingeführt und die Impedanz gemessen. Derartig behandelte Guttaperchastifte können jedoch auch durch Erhitzen nicht miteinander verbunden werden. Außerdem wird das für den Überzug verwendete Silber korrodiert, was bei der großen Oberfläche des Überzugs zu Problemen führen kann.

Demgegenüber ist es die Aufgabe der vorliegenden Erfindung, ein Wurzelkanalfüllmittel bereitzustellen, das die genannten Nachteile des Stands der Technik überwindet. Insbesondere soll die Lage des Füllmaterials in einem Wurzelkanal genau bestimmt werden können, das Material dann idealerweise im Kanal verbleiben und der Kanal in üblicher Weise verfüllt werden können.

Diese Aufgaben werden erfindungsgemäß durch die Bereitstellung eines Füllmittels (1) mit einem proximalen (5) und einem distalen (4) Ende für Wurzelkanäle von Menschen und Tieren gelöst, das ein längliches stromleitendes Element (2) umfaßt, welches mit einer Matrix auf Isoprenbasis (3) ummantelt ist, dadurch gekennzeichnet, daß das distale Ende (4) des stromleitenden Elements freiliegt.

Dieses Mittel weist den Vorteil auf, daß seine Lage im Wurzelkanal durch Messung der Impedanz bzw. des Widerstands eines durch das stromleitende Element und den Kiefer fließenden Stroms genau bestimmt werden kann und das Mittel im Kanal verbleiben kann. Ferner kann es durch Erhitzen, durch Kondensation, oder durch Einbringen eines Sealers mit weiteren üblichen Mitteln, wie z.B. Guttaperchastiften, verbunden werden.

Dabei ist der Ausdruck 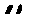 länglich" vorzugsweise so definiert, daß die Ausdehnung des Mittels bzw. des Elements in einer der drei Dimensionen mindestens doppelt so groß ist, wie in jeder einzelnen der beiden anderen Dimensionen.

Bevorzugt ist das erfindungsgemäße Füllmittel dadurch gekennzeichnet, daß das distale Ende (4) des stromleitenden Elements zur Impedanz- oder Widerstandsmessung freiliegt, wobei die distale Endfläche des Füllmittels gemäß einer besonders bevorzugten Ausführungsform durch eine in etwa senkrecht zur Längsachse des stromleitenden Elements verlaufende Schnittebene (4) gebildet wird und das stromleitende Element in der Schnittebene endet.

Gemäß einer bevorzugten Ausführungsform ist das proximale Ende (5) des Füllmittels (1) von der Ummantelung auf Isoprenbasis (3) frei, so daß an dieser Stelle ein übliches Gerät zur Messung der Impedanz bzw. des Widerstands angeschlossen werden kann. Nach der endgültigen Positionierung des Mittels in dem Wurzelkanal kann der proximal überstehende Teil des stromleitenden Elements entfernt und zur Bedeckung des Mittels eine gewisse Menge eines Materials auf Isopren-Basis aufgebracht werden.

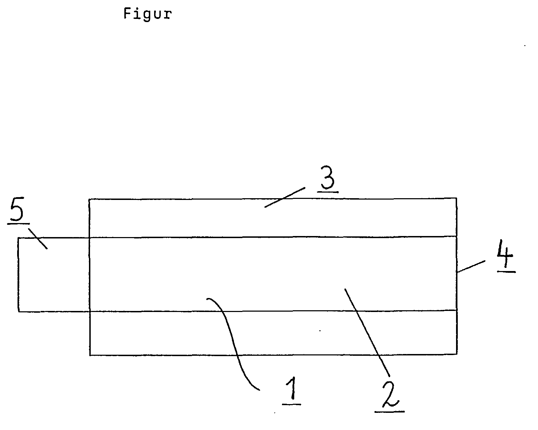

In der beigefügten Figur, die eine bevorzugte Ausführungsform der vorliegenden Erfindung darstellt,
ist (1) das erfindungsgemäße Füllmittel, stellt (2) das längliche stromleitende Element dar, ist (3) die Matrix auf Isoprenbasis und ist (4) das freiliegende distale Ende und (5) das proximale Ende des stromleitenden Elements ohne Ummantelung.

Vorzugsweise umfaßt die Matrix auf Isoprenbasis Trans-Poly-Isopren, Guttapercha, Balata oder ein Gemisch davon, wobei Guttapercha bevorzugt wird. In der Beschreibung der vorliegenden Erfindung soll der Ausdruck Guttapercha auch Isopren, Trans-Poly-Isopren oder Balata umfassen. Bevorzugt bezeichnet er aber nur Guttapercha selbst. Bei dem Guttapercha handelt es sich vorzugsweise um farbloses Trans-Poly-Isopren. Erfindungsgemaß umfaßt die Matrix mindestens 80 Gew.-% Trans-Poly-Isopren.

Besonders bevorzugt weist das erfindungsgemäße Mittel die Form einer üblichen Guttaperchaspitze auf.

Zusätzlich kann das erfindungsgemäße Mittel Zusatzstoffe wie Füllstoffe, Röntgenkontrastmittel, pharmazeutische Wirkstoffe, Tenside, Wachse und Harze enthalten:

Als Füllstoffe können z.B. an sich übliche Stoffe wie Zinkoxid, Siliciumdioxid, Aluminiumoxid, Calciumhydroxid oder Gemische davon in an sich üblichen Mengen eingesetzt werden.

Ein erfindungsgemäßes Füllmittel kann vorzugsweise einen Titandraht mit einem Durchmesser von 0,1 mm umfassen, der mit einer Matrix ummantelt ist, die
(a) 1 bis 99 Gew.-% Guttapercha,
(b) 1 bis 99 Gew.-% Füllstoff,
(c) gegebenenfalls zusätzlich bis zu 50 Gew.-% Röntgenkontrastmittel, bezogen auf (a) und (b), und
(d) gegebenenfalls zusätzliche übliche Komponenten umfaßt.

Beispielsweise kann die Matrix:
(a) etwa 43,5 Gew.-% Guttapercha,
(b) etwa 56,5 Gew.-% Zinkoxid als alleinigen anorganischen Füllstoff,
(c) gegebenenfalls zusätzlich bis zu 10 Gew.-% Röntgenkontrastmittel, bezogen auf (a) und (b), und
(d) gegebenenfalls zusätzliche übliche Komponenten umfassen.

Das erfindungsgemäße Mittel weist damit im wesentlichen vier Komponenten auf, die im folgenden noch näher erläutert werden sollen.

### Komponente 1

Die (äußeren) mechanischen Eigenschaften eines erfindungsgemäßen Füllmittels werden in erster Linie durch die Eigenschaften der Matrix bestimmt, die beispielsweise 43,5 bis 65,0 Gew.-% neben 35,0 bis 56,5 Gew.-% Füllstoff (Komponente 2) ausmacht. Die Matrix muß einerseits elastisch sein, damit sie bequem verarbeitet und leicht in den Wurzelkanal eingebracht werden kann. Andererseits soll sie plastische Eigenschaften aufweisen, damit der Wurzelkanal dauerhaft ausgefüllt werden kann, ohne daß ein Wandspalt verbleibt. Darüber hinaus muß die Matrix andere Komponenten, insbesondere den Füllstoff, leicht aufnehmen können und fest an dem stromleitenden Element haften. Für diese Zwecke hat sich eine Matrix mit mindestens 80 Gew.-% Trans-Poly-Isopen als vorteilhaft erwiesen. Als Beispiel kann Guttapercha angeführt werden, bei dem es sich um eine Matrix auf natürlicher Basis handelt, deren Hauptbestandteil Trans-Poly-Isopren ist. Selbstverständlich sind auch andere Trans-Poly-Isoprene einsetzbar, wie Balata, synthetische Matrizes auf Isopren-Basis oder Abkömmlinge der genannten Materialien.

### Komponente 2

Das erfindungsgemäße Füllmittel kann Calciumhydroxid, Zinkoxid, Aluminiumoxid, Sliciumdioxid o.a. als Füllstoff enthalten. Dieser Füllstoff liegt beispielsweise in einer Menge von 35,0 bis 56,5 Gew.-% neben 43,5 bis 65,0 Gew.-% Matrix vor.

Zinkoxid kann in einer Menge, bezogen auf die Gesamtzusammensetzung (ohne Stift), von mindestens 60 Gew.-%, vorzugsweise von mindestens 70 Gew.-% vorliegen.

Die Füllmittel lassen sich als Pulver in Guttapercha einwalzen, was den Herstellungsprozeß recht einfach gestalten läßt.

Calciumhydroxid kann den bei entzündlichen Prozessen üblicherweise auftretenden pH-Anstieg abpuffern. Es kann daher erwünscht sein, möglichst viel Calciumhydroxid in den Wurzelkanal einzubringen. Der Anteil an Calciumhydroxid im erfindungsgemäßen Füllmittel orientiert sich daher gegebenenfalls einerseits an diesem Wunsch und andererseits am Aufnahmevermögen der Matrix für den Füllstoff. Ein Beispiel für ein Füllmittel mit einem recht hohen Füllstoff-Anteil ist eine Guttapercha-Ummantelung mit einem Gehalt von etwa 56,5 Gew.-% Calciumhydroxid neben etwa 43,5 Gew.-% Guttapercha.

### Komponente 3

Als weitere, allerdings fakultative, wenn auch übliche Komponente kann ein Röntgenkontrastmittel vorgesehen werden. Röntgenkontrastmittel können z.B. aus der Gruppe ausgewählt werden, die aus Zink-, Ytterbium-, Yttrium-, Gadolinium-, Zirkonium-, Strontium-, Wolfram-, Tantal-, Niob-, Barium-, Wismut-, Molybdän- und Lanthanpulver, pulvrigen Legierungen davon, Oxiden, Fluoriden, Sulfaten, Carbonaten, Wolframaten und Carbiden davon, besteht, und Gemischen davon. So kann die Position des Mittels zusätzlich mittels einer Röntgenaufnahme kontrolliert bzw. dokumentiert werden.

Diese Komponente kann in einer Menge von bis zu 50 Gew.-% auf Basis von Matrix und Füllstoff vorgesehen werden.

### Komponente 4

Das erfindungsgemäße Mittel umfaßt ein längliches stromleitendes Element, das mit einer Matrix ummantelt ist. Das Element wird vorzugsweise eine Länge von bis zu 7 cm, vorzugsweise von bis zu 5 cm und einen Durchmesser von etwa 0,1 mm aufweisen.

Bei einer besonders bevorzugten Ausführungsform handelt es sich bei dem länglichen stromleitenden Element um ein biokompatibles, im Zahn beständiges, stabiles Element wie Titan. Besonders wird Titandraht mit einem Durchmesser von bis zu 1 mm, bevorzugt bis zu 0,5 mm, stärker bevorzugt von etwa 0,2 mm und am stärksten bevorzugt von etwa 0,1 mm eingesetzt. Der Draht kann jeden beliebigen Querschnitt wie einen rotationssysmmetrischen, zylindrischen oder elliptischen Querschnitt aufweisen.

Ferner ist es eine Aufgabe der vorliegenden Erfindung, ein Verfahren zur Herstellung eines derartigen Mittels vorzusehen.

Gemäß einer weiteren Ausführungsform der Erfindung wird demgemäß ein Verfahren zum Herstellen eines erfindungsgemäßen Füllmittels vorgesehen, das dadurch gekennzeichnet ist, daß man
(a) einen Film einer Matrix auf Isopren-Basis bildet,
(b) in den Film der Matrix gegebenenfalls einen Füllstoff, ein Röntgenkontrastmittel und weitere fakultative übliche Hilfsmittel einwalzt, und
(c) mit dem Film ein stromleitendes Element ummantelt.

Gemäß einer bevorzugten Ausführungsform ist das Verfahren dadurch gekennzeichnet, daß man den Film vor Schritt (c) zerkleinert und extrudiert.

Nachstehend wird die Erfindung durch ein Beispiel näher erläutert.

### Beispiel

Zur Herstellung einer Guttaperchaummantelung wurde Guttapercha zunächst zwischen einer Trägerwalze und einer Andruckwalze verwalzt, so daß sich die Guttapercha als dünner Film bzw. fellartig um die Trägerwalze legte. Danach wurde pulverförmiges Zinkoxid in einem Gewichtsverhältnis von 56,5 % Zinkoxid : 43,5 % Guttapercha in den gebildeten Film eingewalzt, der Film von der Trägerwalze abgeschält, der abgeschälte Film zerkleinert und zu einem dünnen drahtartigen Strang extrudiert. Dieser Strang wurde danach zerschnitten und erneut gewalzt und dann um einen Titandraht mit einem Durchmesser von 0,1 mm gerollt, so daß auf der einen (proximalen) Seite ein etwa 1 cm freies Stück des Titandrahts aus der Umhüllung hervorstand. In einem Abstand von ca. 5 cm von der Spitze des freien Titandrahts entfernt wurden auf der anderen (distalen) Seite der Titandraht und die Ummantelung glatt durchgetrennt.

Das gebildete Füllmittel ließ sich leicht in einen Wurzelkanal einführen und die Tiefe des Wurzelkanals konnte leicht durch Impedanzmesung bestimmt und entsprechend optimiert werden. Nach der Einführung des Füllmittels konnten weitere Guttaperchastifte durch laterale Kondensation in den Wurzelkanal eingebracht und der Kanal spaltenfrei verschlossen werden.

## Patentansprüche

1. Füllmittel (1) mit einem proximalen (5) und einem distalen (4) Ende für Wurzelkanäle von Menschen und Tieren, das ein längliches stromleitendes Element (2) umfaßt, welches mit einer Matrix auf Isoprenbasis (3) ummantelt ist, dadurch gekennzeichnet, daß das distale Ende (4) des stromleitenden Elements freiliegt.

2. Füllmittel nach Anspruch 1 dadurch gekennzeichnet, daß das distale Ende (4) des stromleitenden Elements zur Impedanz- oder Widerstandsmessung freiliegt.

3. Füllmittel nach Anspruch 1 dadurch gekennzeichnet, daß die distale Endfläche des Füllmittels durch eine in etwa senkrecht zur Längsachse des stromleitenden Elements verlaufende Schnittebene gebildet wird, wobei das stromleitende Element in der Schnittebene endet.

4. Füllmittel nach einem der vorstehenden Ansprüche, dadurch gekennzeichnet, daß das proximale Ende (5) des Füllmittels von der Ummantelung frei ist.

5. Füllmittel nach einem der vorstehenden Ansprüche, dadurch gekennzeichnet, daß das stromleitende Element ein Draht, wie ein Titandraht ist.

6. Füllmittel nach einem der vorstehenden Ansprüche, gekennzeichnet durch eine Matrix auf Trans-Poly-Isopren-Basis, Guttapercha-Basis oder Balata-Basis.

7. Füllmittel nach einem der vorstehenden Ansprüche, gekennzeichnet durch eine Matrix mit mindestens 80 Gew.-% Trans-Poly-Isopren.

8. Füllmittel nach einem der vorstehenden Ansprüche in Form einer Guttaperchaspitze.

9. Füllmittel nach einem der vorstehenden Ansprüche, dadurch gekennzeichnet, daß die Matrix Zusatzstoffe, ausgewählt aus Füllstoffen, Röntgenkontrastmitteln, pharmazeutischen Wirkstoffen, Wachsen und Harzen enthält.

10. Füllmittel nach Anspruch 9, dadurch gekennzeichnet, daß der Füllstoff Calciumhydroxid, Zinkoxid, Siliciumdioxid, Aluminiumoxid oder Gemische davon umfaßt.

11. Füllmittel nach einem der Ansprüche 9 oder 10, dadurch gekennzeichnet, daß der pharmazeutische Wirkstoff ein in wäßrigen Medien löslicher oder dispergierbarer Wirkstoff ist.

12. Füllmittel nach Anspruch 11, dadurch gekennzeichnet, daß der Wirkstoff ein antibakteriell wirksames Mittel wie ein Antibiotikum und/oder ein Glucocorticoid ist.

13. Füllmittel nach einem der Ansprüche 9 bis 12, dadurch gekennzeichnet, daß das Röntgenkontrastmittel aus der Gruppe der Zink-, Ytterbium-, Yttrium-, Gadolinium-, Zirkonium-, Strontium-, Wolfram-, Tantal-, Niob-, Barium-, Wismut-, Molybdän- und Lanthanpulver, pulvrigen Legierungen davon, Oxiden, Fluoriden, Sulfaten, Carbonaten, Wolframaten und Carbiden davon, und Gemischen davon ausgewählt wird.

14. Verfahren zur Herstellung eines Mittels nach einem der vorstehenden Ansprüche, dadurch gekennzeichnet, daß man
(a) einen Film einer Matrix auf Isopren-Basis bildet,
(b) in den Film der Matrix gegebenenfalls einen Füllstoff, ein Röntgenkontrastmittel und weitere fakultative übliche Hilfsmittel einwalzt, und
(c) mit dem Film ein stromleitendes Element ummantelt.

15. Verfahren nach Anspruch 14, dadurch gekennzeichnet, daß man den Film vor Schritt (c) zerkleinert und extrudiert.

16. Verfahren nach einem der Ansprüche 14 oder 15, dadurch gekennzeichnet, daß das stromleitende Element und die Ummantelung auf der einen (distalen) Seite glatt durchtrennt werden.
